# EUROPEAN PATENT APPLICATION

(11) **EP 4 275 851 A1**
(43) Date of publication of application: **15.11.2023**
(21) Application number: 23164520.1
(22) Date of filing: 28.03.2023
(51) Int. Cl.: B27B 5/24, B25F 5/00, B25F 5/02, B27B 5/29

(54) **TABLE CUTTING DEVICE**

(30) Priority: 10.05.2022 CN 202210500868
(71) Applicant: Nanjing Chervon Industry Co., Ltd., Nanjing, Jiangsu 211106 (CN)
(72) Inventor: JIN, Zhongyi, Nanjing, Jiangsu, 211106 (CN); WU, Fan, Nanjing, Jiangsu, 211106 (CN); WANG, Shisheng, Nanjing, Jiangsu, 211106 (CN)
(74) Representative: Sun, Yiming

(57) **Abstract**

Provided is a table cutting device. The table cutting device includes:
a workbench assembly (10) for placing a workpiece;
a cutting assembly (20) for completing an operation on the workpiece, is movable relative to the workbench assembly (10), and includes a cutting member (210) rotating about a first axis (201);
a motor (440, 830) which is disposed on a side of the workbench assembly (10), drives the cutting assembly (20) to move, and rotates about a second axis (441, 842);
and a circuit board (70). The table cutting device further includes a mounting housing (420, 810) in which the circuit board (70) and the motor (440, 830) are disposed. The table cutting device has high heat dissipation efficiency, a reasonable layout, and a stable structure.

## Description

This application claims priority to Chinese Patent Application No. CN 202210500868.2 filed on May 10, 2022, the disclosures of which are incorporated herein by reference in its entirety.

### TECHNICAL FIELD

The present application relates to a power tool and, in particular, to a table cutting device.

### BACKGROUND

A table saw is a table cutting device which can cut workpieces. Since a saw blade of the table saw typically moves at a high speed, motors and circuit boards of all table saws are confronted with the problem of heat dissipation. Since a cutting assembly needs to perform movements such as a rotation and a lift, a higher requirement is placed on the arrangement of a motor, a circuit board, and a heat dissipation air path.

### SUMMARY

To solve the deficiencies of the related art, an object of the present application is to provide a table cutting device with high heat dissipation efficiency and a reasonable structure.

To achieve the preceding object, the present application adopts the technical solutions described below.

A table cutting device includes: a workbench assembly for placing a workpiece; a cutting assembly for completing an operation on the workpiece, is movable relative to the workbench assembly, and includes a cutting member rotating about a first axis; a motor which is disposed on a side of the workbench assembly, drives the cutting assembly to move, and is rotatable about a second axis; and a circuit board. The table cutting device further includes a mounting housing in which the circuit board and the motor are disposed.

In some examples, the mounting housing is formed with a first housing portion and a second housing portion which communicate with each other, where the motor is disposed in the first housing portion and the circuit board is disposed in the second housing portion.

In some examples, the mounting housing is formed with an air inlet formed at an end of the second housing portion and facing an end of the circuit board.

In some examples, the mounting housing is formed with an air outlet formed at an end of the first housing portion, and the motor and the circuit board are disposed between the air inlet and the air outlet.

In some examples, the air outlet and the air inlet are located at different positions along the direction of the first axis.

In some examples, the table cutting device includes a heat dissipation element disposed at the air inlet.

In some examples, the first housing portion and the second housing portion are spaced apart.

In some examples, the first housing portion and the second housing portion are spaced apart by a stroke of a housing, a gap, or a combination of the housing and the gap.

In some examples, at least a communication portion is disposed between the first housing portion and the second housing portion, where the first housing portion is connected to the second housing portion through the communication portion.

In some examples, the communication portion is disposed at an end of the first housing portion and the second housing portion facing away from the cutting member.

In some examples, one end of the first housing portion is connected to the second housing portion, and an air outlet is disposed at the other end of the first housing portion.

In some examples, the table cutting device includes a mounting base, where the motor is disposed on the mounting base, and the mounting base is connected to a lifting assembly and moves on the lifting assembly to move the cutting assembly.

In some examples, an air outlet portion is formed in the mounting base.

In some examples, the mounting housing is connected to the mounting base.

In some examples, the lifting assembly includes guide rails, where the mounting base is connected to the guide rails and is movable along the guide rails.

A table cutting device includes: a workbench for placing a workpiece; a cutting assembly for completing an operation on the workpiece, is movable relative to the workbench, and includes a cutting member rotating about a first axis; a motor which is disposed on a side of the workbench and drives the cutting assembly to move; and a circuit board. The table cutting device further includes a mounting housing formed with an air inlet and an air outlet, where the motor and the circuit board are disposed between the air inlet and the air outlet.

In some examples, the mounting housing is formed with a first housing portion and a second housing portion which communicate with each other, where the motor is disposed in the first housing portion and the circuit board is disposed in the second housing portion.

In some examples, the air outlet and the air inlet are located at different positions along the direction of the first axis.

In some examples, the air outlet is formed at an end of the first housing portion, and the air inlet is formed at an end of the second housing portion.

A table cutting device includes: a workbench for placing a workpiece; a cutting assembly for completing an operation on the workpiece, is movable relative to the workbench, and includes a cutting member rotating about a first axis; and a motor which is disposed on a side of the workbench and drives the cutting assembly to move. The table cutting device further includes a circuit board disposed along a first direction, where the first direction is parallel to a rotation axis of the motor.

The present application has the following benefits: the table cutting device of the present application has high heat dissipation efficiency, a reasonable layout, and a stable structure.

### BRIEF DESCRIPTION OF DRAWINGS

FIG. 1 is a structure view of the present application;
FIG. 2 is a structure view of the present application from another angle of view;
FIG. 3 is a structure view of the present application from another angle of view;
FIG. 4 is a partial structure view of the present application;
FIG. 5 is a structure view of a cutting assembly and a drive assembly of the present application;
FIG. 6 is a structure view of a cutting assembly and a drive assembly of the present application from another angle of view;
FIG. 7 is an exploded view of a drive assembly of the present application;

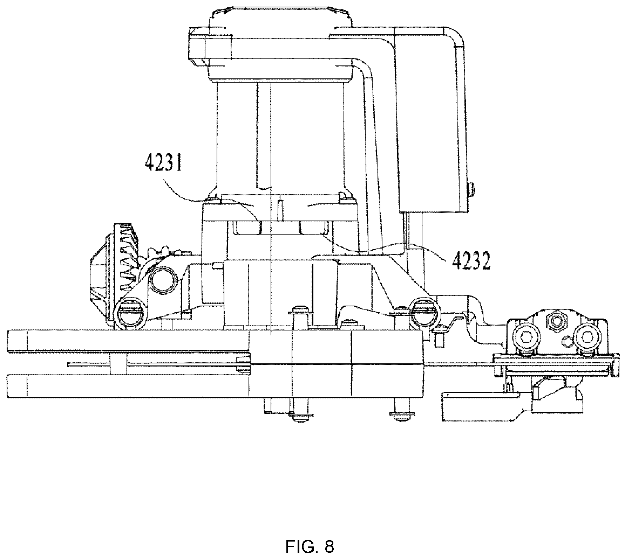

FIG. 8 is a bottom view of a drive assembly of the present application;
FIG. 9 is an exploded view of structures of the present application such as a workbench assembly;
FIG. 10 is a partial enlarged view of FIG. 9;
FIG. 11 is a structure view of another example of the present application;
FIG. 12 is a structure view of a cutting assembly and a drive assembly of another example of the present application;
FIG. 13 is an exploded view of a cutting assembly and a drive assembly of another example of the present application;
FIG. 14 is an exploded view of a drive assembly of another example of the present application;
FIG. 15 is a schematic view of FIG. 14 from another angle of view; and
FIG. 16 is a sectional view of a mounting housing, a motor, and a circuit board in FIG. 13.

### DETAILED DESCRIPTION

In order that the preceding object, features, and advantages of the present application can be more apparent and easier to understand, examples of the present application are described below in detail in conjunction with drawings. Numerous specific details are set forth below to facilitate a thorough understanding of the present application. However, the present application can be implemented in many other manners than those described herein, and those skilled in the art may make similar modifications without departing from the connotation of the present application. Therefore, the present application is not limited by the examples disclosed below.

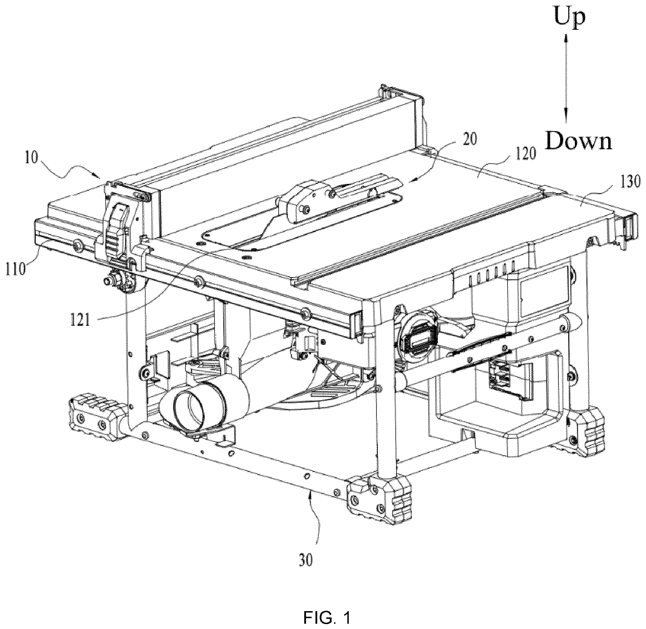

To facilitate the illustration of the technical solutions of the present application, the directions "up" and "down" as shown by arrows in FIG. 1 are further defined. The directions such as "up" and "down" mentioned in this example are all exemplified by the state of a table cutting device 1 in FIG. 1.

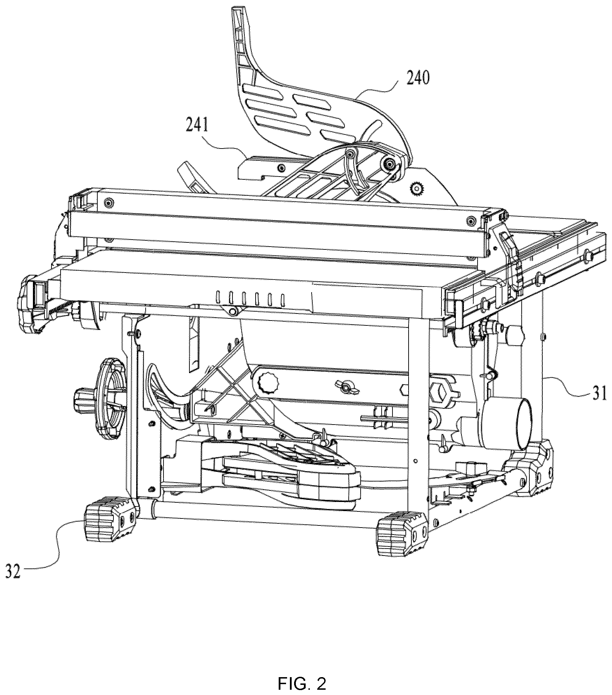

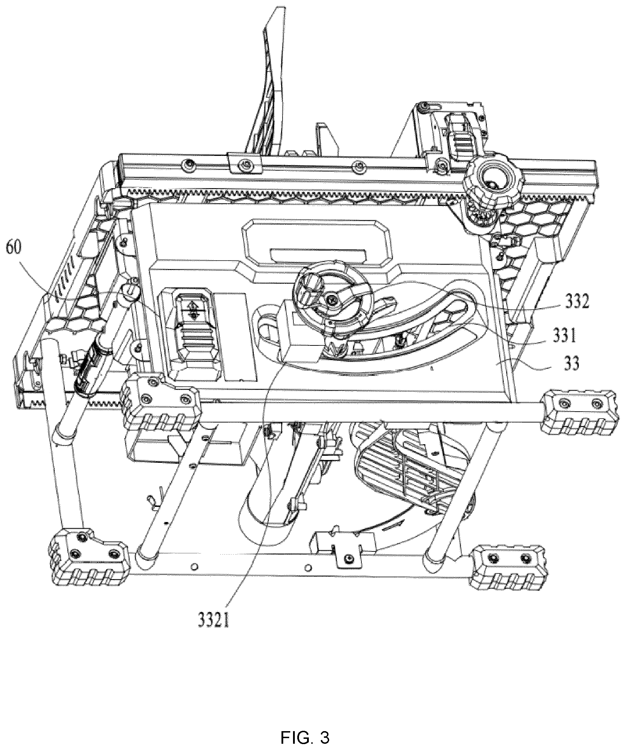

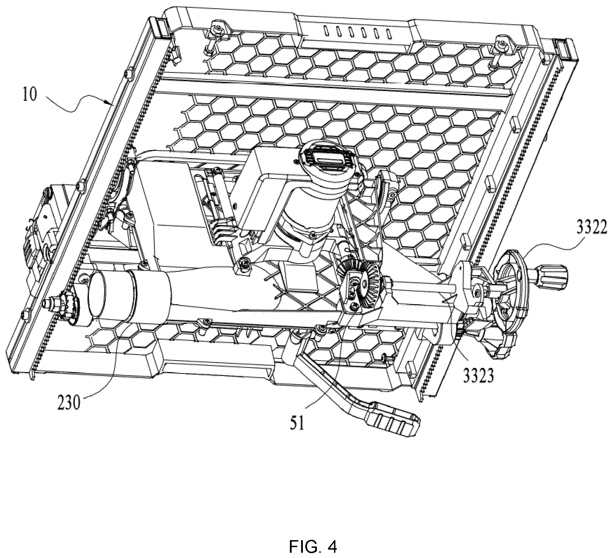

As shown in FIGS. 1 to 5, the table cutting device 1 includes a workbench assembly 10, a cutting assembly 20, a support assembly 30, and a drive assembly 40. The workbench assembly 10 is supported by the support assembly 30. The cutting assembly 20 is driven by the drive assembly 40 to work.

The workbench assembly 10 includes rails 110, a first workbench portion 120, and a second workbench portion 130. A cutting member opening 121 is formed substantially in the middle of the first workbench portion 120. The second workbench portion 130 is aligned with the upper surface of the first workbench portion 120, and the first workbench portion 120 and the second workbench portion 130 together form a working surface for supporting a workpiece. Two sides of the second workbench portion 130 and two sides of the first workbench portion 120 are connected to the rails 110.

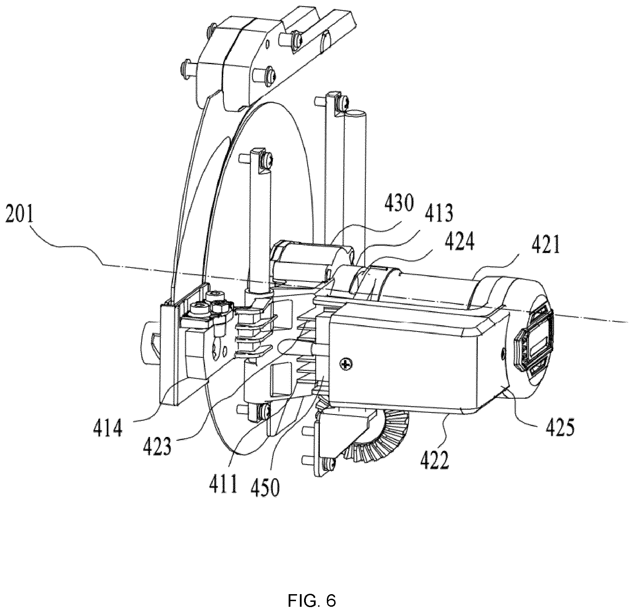

As shown in FIGS. 1 to 6, the cutting assembly 20 includes a cutting member 210 rotatable about a first axis 201, and the cutting member 210 is mounted to the drive assembly 40 including a motor 440. The cutting assembly 20 further includes a dust discharge member 230, a blade follower 220, a shield 240, and the like. The cutting member 210 is configured to extend through the cutting member opening 121 and also configured to be lifted, lowered, and inclined relative to the workbench assembly 10, as further described below. The dust discharge member 230 is formed with a panel which can shelter the cutting member 210 on one side from being contacted by an operator, and the dust discharge member 230 collects dust and debris generated during cutting. The collected dust and debris are discharged out of the table cutting device 1 through the dust discharge member 230. The dust discharge member 230 has a port which may be connected to a vacuum hose, a dust collection bag, or the like. The blade follower 220 is disposed on a side of the cutting member 210 and configured to be parallel to the plane in which the cutting member 210 rotates. The blade follower 220 is disposed on the rear side of the cutting member 210 during cutting, and the rear side refers to a direction relatively away from a side from which the workpiece enters, so that the blade follower 220 separates the cut workpiece on the opposite side of the cutting. The blade follower 220 and the cutting member 210 can pass through the cutting member opening 121 together. The shield 240 is mounted outside the cutting member 210 and at least covers part of the cutting member 210 to protect a user from being hurt by the cutting member 210. The shield 240 has a shield base 241, where the shield 240 is rotatable relative to the shield base 241, and the shield 240 is connected to the blade follower 220 through the shield base 241.

As shown in FIGS. 1 to 3, the support assembly 30 is connected to the workbench assembly 10 and disposed below the workbench assembly 10. The support assembly 30 includes several support rods 31 and base members 32 which are connected to each other. The several support rods 31 are disposed vertically or horizontally, and the base members 32 may be connected to the support rods 31 in different directions or may be disposed at end portions of some support rods 31. The base members 32 are in contact with a placement surface on which the table cutting device 1 is disposed. In other examples, the support rods 31 may be inclined at a certain angle relative to the workbench assembly 10. A support plate 33 is further included on a side of the support assembly 30, is connected to support rods 31, and generally forms a plane. The table cutting device 1 further includes an adjustment mechanism 332. The adjustment mechanism 332 can rotate the cutting assembly 20 to a position for the cutting assembly 20 to be inclined at a certain angle relative to the workbench assembly 10. The support plate 33 is formed with an arc-shaped opening 331, where the adjustment mechanism 332 extends through the arc-shaped opening 331. A switch assembly 60 for activating the motor 440 is disposed on the support plate 33, particularly, near the edge of the support plate 33. The switch assembly 60 controls the motor 440 to be started and stopped. In addition, the switch assembly 60 may be further integrated with an element which controls the movement of the cutting assembly 20.

The adjustment mechanism 332 includes a handle 3322 and an adjustment rod 3323. One end of the adjustment rod 3323 is directly or indirectly connected to the cutting assembly 20, and the other end of the adjustment rod 3323 extends from the arc-shaped opening 331 to be connected to the handle 3322. When the adjustment mechanism 332 drives the cutting assembly 20 to rotate to the position for the cutting assembly 20 to be inclined at a certain angle relative to the workbench assembly 10, the cutting assembly 20 is positioned at the angular position. When the cutting member 210 is at a desired angle to perform an angled cutting operation, the handle 3322 or another locking device can lock the cutting assembly 210 for performing the angled cutting operation. The adjustment mechanism 332 is further provided with an indication element 3321 for indicating the angle at which the adjustment mechanism 332 and/or the cutting assembly 20 are located. Alternatively, the adjustment mechanism 332 is provided with an indication element mounting base for mounting other angle sensing elements. In some examples, in addition to being rotatable along the arc-shaped opening 331, the handle 3322 may rotate about its own axis. The handle 3322 is connected to the adjustment rod 3323, the adjustment rod 3323 is connected to a lifting assembly 50, and the handle 3322 rotates to drive the adjustment rod 3323 to rotate so that the movement of the lifting assembly 50 is implemented. Specifically, the lifting assembly 50 is provided with a gear set 51 and guide rails 52, and the adjustment rod 3323 is connected to the gear set 51 and rotated to control the movement of the gear set 51. The gear set 51 includes two bevel gears meshing with each other to convert the rotation of the horizontal adjustment rod 3323 into the rotation of the vertical guide rails 52. At least one of the guide rails 52 is used as a driving guide rail provided with threads, and at least one of the guide rails 52 is used as a driven guide rail which implements a guiding function.

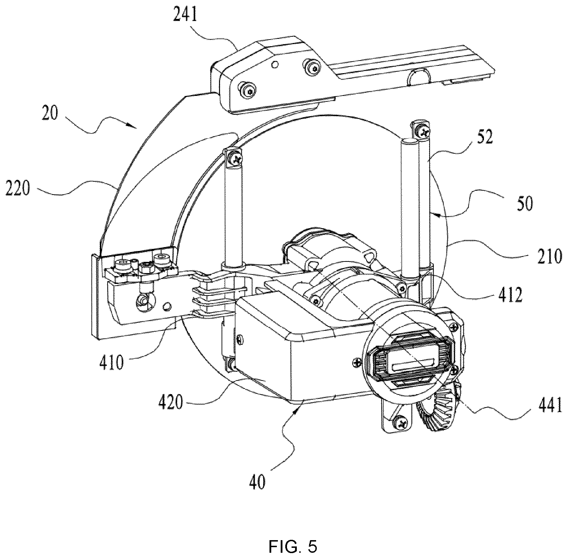

The drive assembly 40 further includes a mounting housing 420, a mounting base 410, and a transmission assembly 430. The motor 440 is disposed in the mounting housing 420 and has an output shaft rotating about a second axis 441. The motor 440 is located on a side of the workbench assembly 10 and drives the cutting assembly 20 to move to complete an operation on the workpiece. The mounting housing 420 is connected to the mounting base 410 and the mounting base 410 is connected to the guide rails 52 and is movable along the guide rails 52. The mounting housing 420 is formed with a first housing portion 421 and a second housing portion 422 which communicate with each other, and the motor 440 is disposed in the first housing portion 421. The first housing portion 421 and the second housing portion 422 are spaced apart by a stroke of a housing or a combination of the housing and a gap. As shown in FIGS. 5 to 7, at least a communication portion 425 is disposed between the first housing portion 421 and the second housing portion 422, and the communication portion 425 may be disposed at an end facing away from the cutting member 210.

The table cutting device 1 includes a circuit board 70 disposed in the second housing portion 422. The circuit board 70 is disposed along a first direction F parallel to the second axis 441. For a reasonable and compact space layout, when the circuit board 70 is disposed in the direction parallel to the second axis 441, the first housing portion 421 also has at least one wall surface parallel to the second axis 441. In this example, the circuit board 70 is disposed on a side of the motor 440, and a projection of the circuit board 70 on the plane in which the cutting member 210 rotates does not overlap a projection of the motor 440 on the plane in which the cutting member 210 rotates. The circuit board 70 is not disposed at an end portion of the motor 440 facing away from the cutting member 210.

The mounting housing 420 is formed with an air inlet 423. The air inlet 423 is formed at one end of the second housing portion 422, and the preceding communication portion 425 is formed at the other end of the second housing portion 422. The air inlet 423 faces an end of the circuit board 70, that is, the air inlet 423 is disposed near the end of the circuit board 70. A heat dissipation element 450 is disposed at the air inlet 423. The heat dissipation element 450 may be disposed in the second housing portion 422, may be disposed outside the second housing portion 422, or may be configured to pass through the air inlet 423. The heat dissipation element 450 is formed with multiple fins having gaps between the fins, and an external airflow passes through the air inlet 423 and the gaps between the fins of the heat dissipation element 450 and enters the second housing portion 422.

One end of the second housing portion 422 is connected to the first housing portion 421, the first housing portion 421 is connected to the second housing portion 422 through the communication portion 425, and an air outlet 424 is disposed at the other end of the first housing portion 421. The motor 440 is disposed in the first housing portion 421, and the air outlet 424 is disposed on a side of the motor 440. In other words, the circuit board 70 and the motor 440 are disposed between the air inlet 423 and the air outlet 424 so that a heat dissipation airflow passes through the circuit board 70 and then the motor 440 and then is discharged out of the mounting housing 420, improving heat dissipation efficiency.

A first unit housing 401 and a second unit housing 402 are combined into the mounting housing 420. In this example, the first unit housing 401 mainly constitutes the first housing portion 421 and at least partially constitutes part of the second housing portion 422. The second unit housing 402 constitutes the other part of the second housing portion 422 and is detachably connected to the first unit housing 401. When the second unit housing 402 is detached from the first unit housing 401, part of the circuit board 70 and part of the motor 440 may be exposed in the first unit housing 401 so that inspection and maintenance are facilitated. The second unit housing 402 after being detached is substantially L-shaped. The first unit housing 401 includes a cylindrical portion for accommodating the motor 440 and another L-shaped portion which matches and docks with the second unit housing 402. In other examples, the mounting housing 420 may be integrally formed.

The mounting base 410 includes an accommodation cavity for placing the transmission assembly 430, a support base 411, lifting holes 412, and an air outlet portion 413. The support base 411 is near the heat dissipation element 450, and the heat dissipation element 450 is mounted between the mounting base 410 and the second housing portion 422. A fastener is further disposed between the second housing portion 422 and the support base 411 and used for connecting the mounting base 410 to the mounting housing 420. The lifting holes 412 are formed at end portions of the mounting base 410 and connected to the guide rails 52. The lifting holes 412 and the guide rails 52 are distributed on two sides of the transmission assembly 430 so that the movement of the cutting assembly 20 is smoother. The air outlet portion 413 is located at an end of the first housing portion 421 facing the cutting member 210. The air outlet portion 413 mates with the end of the first housing portion 421 to form the air outlet 424. The air outlet 424 is a gap between the air outlet portion 413 and the end of the first housing portion 421. In other examples, when another type of fan matches the motor 440, the air outlet 424 may be formed on the mounting base 410, and in this case, the air outlet 424 faces the cutting member 210.

The air outlet 424 and the air inlet 423 are located at different positions along the direction of the first axis 201 so that a high-temperature airflow discharged from the air outlet 424 and a relatively low-temperature airflow entering the air inlet 423 do not interfere with each other. Specifically, the air outlet 424 includes several air outlet units 4232, where a division portion 4231 is disposed between each two of the air outlet units 4232, and several division portions 4231 divide the gap between the air outlet portion 413 and the end of the first housing portion 421 into the several air outlet units 4232. The division portions 4231 are configured to face the air inlet 423 so that the airflow discharged from the air outlet 424 does not interfere. In addition, the division portions 4231 can also support the second housing portion 422.

The mounting base 410 further includes a blade following portion 414 formed with a structure for connecting the blade follower 220. The blade following portion 414 is fixedly connected to an end of the blade follower 220, and the cutting member 210 is indirectly connected to the mounting base 410 through the transmission assembly 430 so that the cutting assembly 20 and the mounting base 410 keep moving at the same time. Specifically, one of the guide rails 52 is disposed between the blade following portion 414 and the accommodation cavity of the transmission assembly 430 so that the lifting assembly 50 is more compact.

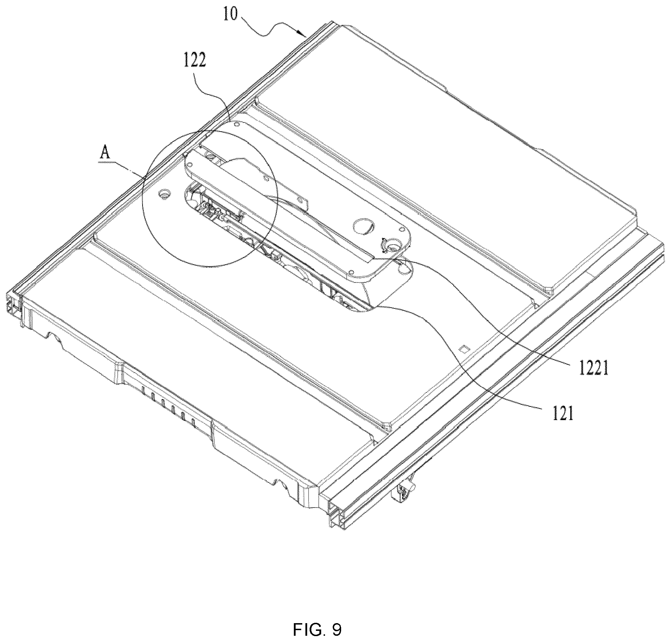

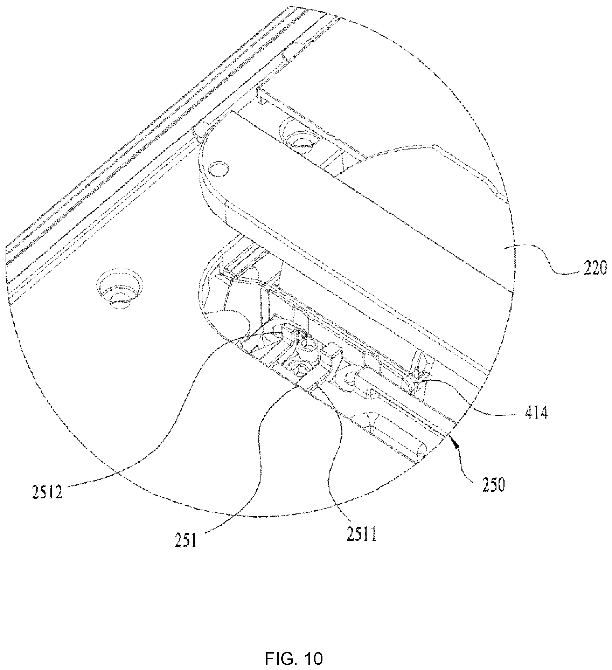

As shown in FIGS. 9 and 10, the workbench assembly 10 further includes a cover plate 122 disposed on a cutting opening 121, and the cover plate 122 is formed with a cutting gap 1221 for the cutting member 210 and the blade follower 220 to pass through. The dust discharge member 230 is disposed on a side of the cutting member 210 and supports the cutting assembly 20 and the drive assembly 40. The top of the dust discharge member 230 is mounted below the workbench assembly 10. At least part of the top of the dust discharge member 230 is located within the range of the cutting opening 121 and does not extend to the cutting gap 1221, that is, the top of the dust discharge member 230 is at least partially located between the edge of the cutting gap 1221 and the edge of the cutting opening 121. The top of the dust discharge member 230 is formed with a block edge 250 protruding upwards. Correspondingly, the housing edge of the cover plate 122 at the cutting gap 1221 extends downwards. The housing extending downwards and the block edge 250 are configured to be staggered. Further, the housing extending downwards and the block edge 250 are staggered and abut against each other. In addition to protruding upwards, the whole block edge 250 may extend, relative to the dust discharge member 230, towards the cutting member 210. The block edge 250 can effectively prevent the user's fingers from being in contact with the cutting member 210, thereby improving the safety of the tool. A block claw portion including at least one block claw 251 is formed at a portion of the block edge 250 close to the blade following portion 414, and the block claw 251 includes a first claw portion 2511 extending towards the cutting member 210 and a second claw portion 2512 extending towards the cover plate 122. A gap exists between adjacent block claws 251 and is used for avoiding corresponding components on the blade following portion 414. The block claws 251 and the block edge 250 are integrally formed. The same safety can be achieved without providing an additional structure for mounting the blade follower 220.

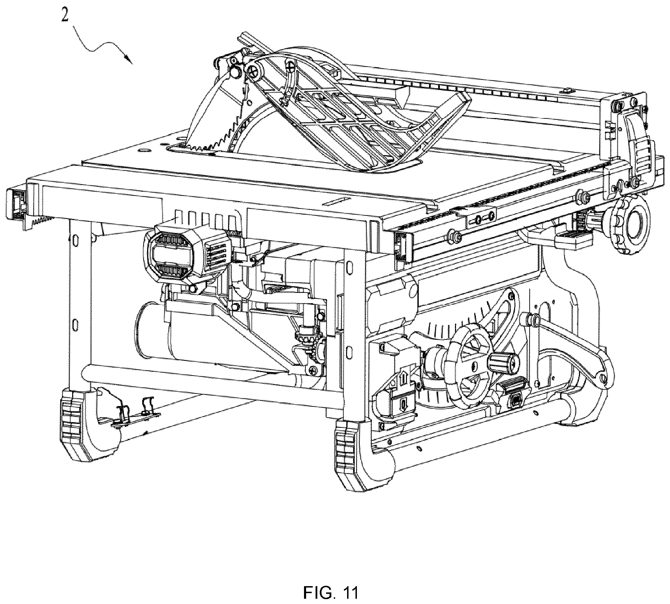

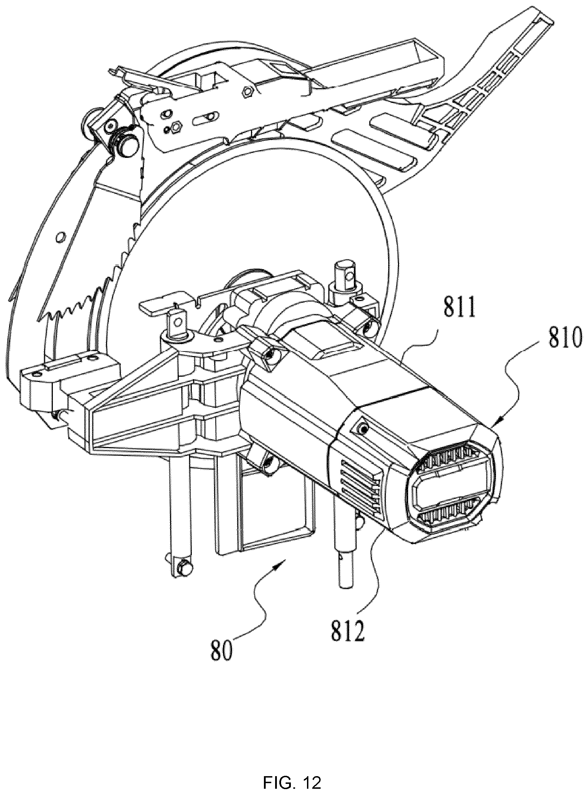

As shown in FIGS. 11 to 15, another example of the present application further provides a table cutting device 2. Only the difference between this example and the preceding example is described below. A drive assembly 80 includes a mounting housing 810, a circuit board assembly 820, and a motor 830.

The mounting housing 810 includes a first housing portion 811 and a second housing portion 812. In this example, the first housing portion 811 and the second housing portion 812 are detachably connected to each other. The circuit board assembly 820 is disposed in the second housing portion 812, and the motor 830 is disposed in the first housing portion 811. The motor 830 rotates about an output axis. The circuit board assembly 820 is disposed along a direction parallel to the output axis. The cutting member rotates in a cutting plane perpendicular to the preceding output axis. Unlike the previous example, a projection of the circuit board assembly 820 on the cutting plane at least partially coincides with a projection of the motor 830 on the cutting plane. The circuit board assembly 820 is disposed at an end portion of the motor 830 facing away from the cutting member.

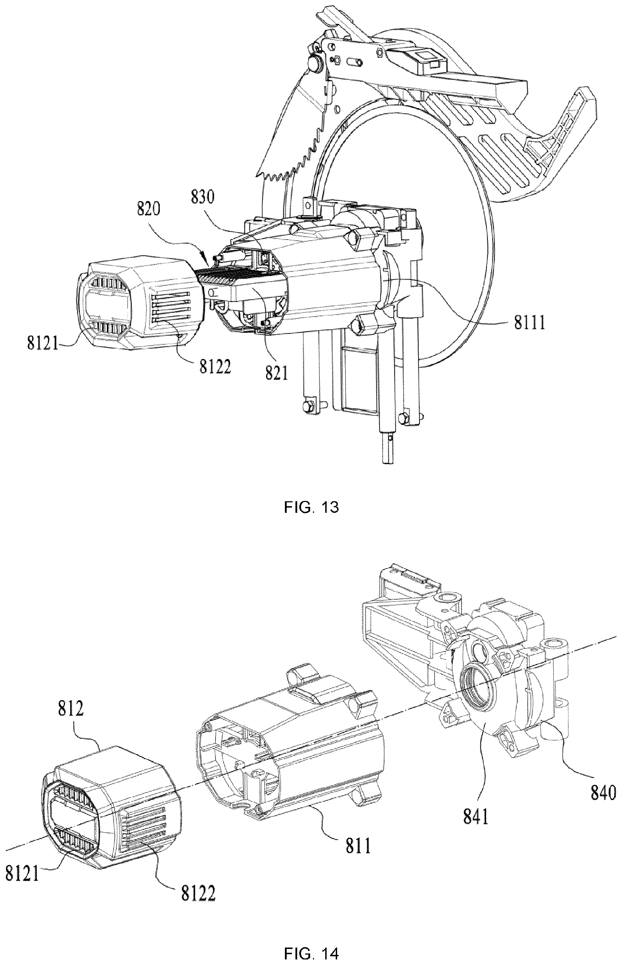

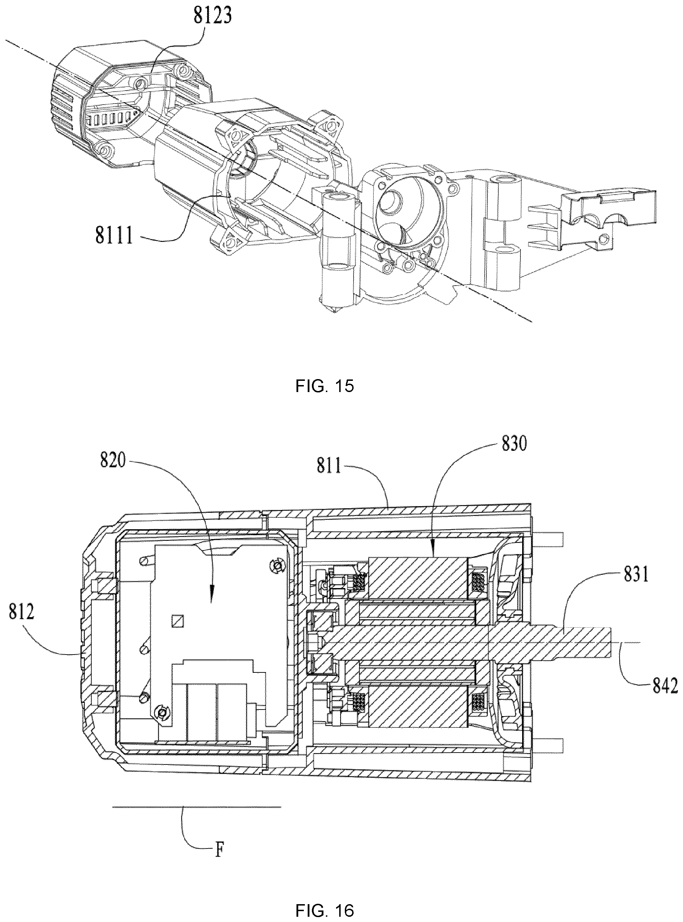

As shown in FIG. 14, the second housing portion 812 includes air inlets including at least a first air inlet 8121 and a second air inlet 8122 which are in different directions. The air inlets are disposed at an end of the second housing portion 812 facing away from the cutting member. Specifically, the direction in which the first air inlet 8121 is disposed and the direction in which the second air inlet 8122 is disposed may be perpendicular to each other or at a certain angle. An air outlet is disposed at an end of the first housing portion 811 facing the cutting member so that a heat dissipation airflow passes through the circuit board assembly 820 and then the motor 830. As shown in FIG. 15, a first partition 8111 is disposed in the first housing portion 811, where the first partition 8111 is disposed on the peripheral side of the first housing portion 811 and formed between the motor 830 and the sidewall of the first housing portion 811, and a certain gap exists between the first partition 8111 and the first housing portion 811. Two ends of the first partition 8111 are not closed so that the airflow can penetrate through the preceding gap, and the first partition 8111 functions as a flow guide. A second partition 8123 is disposed in the second housing portion 812, where the second partition 8123 is disposed between the edge of the air inlet and the sidewall of the second housing portion 812 and used for increasing the pressure of intake air.

The mounting housing 810 is connected to the cutting assembly and the lifting assembly by a mounting base 840. The mounting base 840 is connected to the first housing portion 811. The mounting base 840 has a mounting surface 841 facing the end of the first housing portion 811, where a via is formed in the middle of the mounting surface 841, and an output shaft 831 of the motor 830 passes through the via. The mounting surface 841 is conical, stepped, or arc-shaped and is inclined from the central via to the edge towards the cutting member. In this example, since a centrifugal fan matches the motor 830, the air outlet is naturally formed between the inclined mounting surface 841 and the first housing portion 811, and the inclined mounting surface 841 improves the flow rate of the airflow.

The circuit board assembly 820 includes a housing 821 on which a circuit board is placed. The housing 821 has an opening on one side, and heat dissipation ribs are formed on the side opposite to the opening, thereby increasing the heat transfer area of the circuit board assembly 820 and improving the heat dissipation efficiency.

As shown in FIG. 16, the output shaft 831 of the motor 830 rotates about a second axis 842, and the circuit board assembly 820 is disposed along a first direction F parallel to the second axis 842.

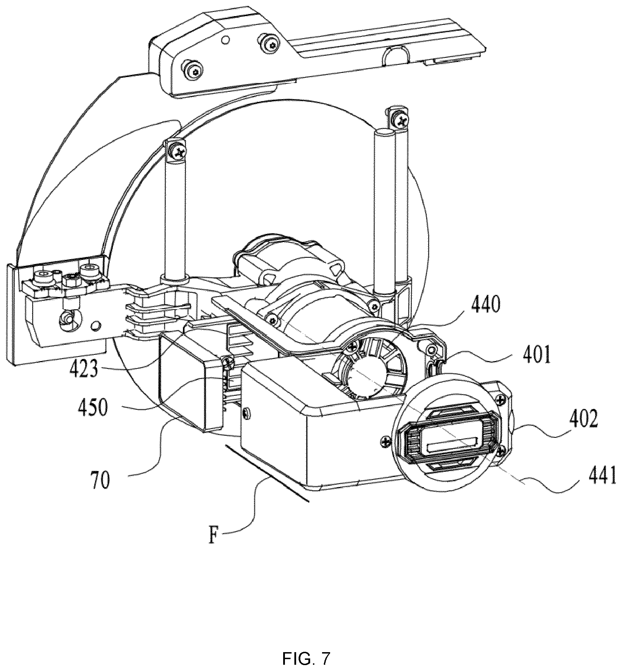

In an example, the circuit board assembly 820 of the table cutting device 2 includes a first circuit board and a second circuit board, and the second circuit board is substantially perpendicular to the first circuit board. Referring to FIG. 7 again, that is to say, in examples where at least two circuit boards need to be used, when the first circuit board is arranged in the same manner as the circuit board 70 in FIG. 7, the second circuit board may be substantially perpendicular to the circuit board 70, that is, the second circuit board may be substantially perpendicular to the second axis 441. Specifically, the second circuit board may be placed in the second unit housing 402.

The basic principles, main features, and advantages of the present application are shown and described above. It is to be understood by those skilled in the art that the preceding examples do not limit the present application in any form, and all technical solutions obtained through equivalent substitutions or equivalent transformations fall within the scope of the present application.

## Claims

1. A table cutting device, comprising:
a workbench assembly for placing a workpiece;
a cutting assembly for completing an operation on the workpiece, is movable relative to the workbench assembly, and comprises a cutting member rotating about a first axis;
a motor disposed on a side of the workbench assembly, drives the cutting assembly to move, and is rotatable about a second axis; and
a circuit board;
wherein the table cutting device further comprises:
a mounting housing in which the circuit board and the motor are disposed.

2. The table cutting device according to claim 1, wherein the mounting housing is formed with a first housing portion and a second housing portion which communicate with each other, wherein the motor is disposed in the first housing portion and the circuit board is disposed in the second housing portion.

3. The table cutting device according to claim 2, wherein the mounting housing is formed with an air inlet formed at an end of the second housing portion and facing an end of the circuit board.

4. The table cutting device according to claim 3, wherein the mounting housing is formed with an air outlet formed at an end of the first housing portion, and the circuit board and the motor are disposed between the air inlet and the air outlet.

5. The table cutting device according to claim 4, wherein the air outlet and the air inlet are located at different positions along a direction of the first axis.

6. The table cutting device according to claim 3, comprising a heat dissipation element disposed at the air inlet.

7. The table cutting device according to claim 2, wherein the first housing portion and the second housing portion are spaced apart.

8. The table cutting device according to claim 7, wherein the first housing portion and the second housing portion are spaced apart by a stroke of a housing, a gap, or a combination of the housing and the gap.

9. The table cutting device according to claim 2, wherein at least a communication portion is disposed between the first housing portion and the second housing portion, wherein the first housing portion is connected to the second housing portion through the communication portion.

10. The table cutting device according to claim 9, wherein the communication portion is disposed at an end of the first housing portion and the second housing portion facing away from the cutting member.

11. The table cutting device according to claim 2, wherein an end of the first housing portion is connected to the second housing portion, and an air outlet is disposed at another end of the first housing portion.

12. The table cutting device according to claim 1, comprising a mounting base, wherein the motor is disposed on the mounting base, and the mounting base is connected to a lifting assembly and moves on the lifting assembly to move the cutting assembly.

13. The table cutting device according to claim 12, wherein an air outlet portion is formed in the mounting base.

14. The table cutting device according to claim 12, wherein the mounting housing is connected to the mounting base.

15. The table cutting device according to claim 12, wherein the lifting assembly comprises guide rails, wherein the mounting base is connected to the guide rails and is movable along the guide rails.
